# EUROPEAN PATENT APPLICATION

(11) **EP 1 070 558 A2**
(43) Date of publication of application: **24.01.2001**
(21) Application number: 00305890.6
(22) Date of filing: 12.07.2000
(51) Int. Cl.: B21C 37/04

(54) **Method of manufacturing titanium fiber or titanium alloy fiber**

(30) Priority: 13.07.1999 JP 19959699
(71) Applicant: Bridgestone Corporation, Tokyo (JP)
(72) Inventor: Yoichi, Toda, c/o Kuroiso plant, Bridgestone Corp., Kuroiso-shi, Tochigi 329-3146 (JP)
(74) Representative: Whalley, Kevin

(57) **Abstract**

A method of manufacturing an ultrafine titanium fiber or titanium alloy fiber comprises the steps of: forming a composite strand (6) by binding a multitude of covered wires (4), in which a covering layer (2) is formed around the periphery of a metal wire (1), and covering the wires with an exterior material (5); forming a composite wire (7) by repetitively conducting cold wire-drawing processing and annealing heat treatment to said composite strand (6); and conducting a wire-separating process to form a metal fiber bundle (8) by removing a portion corresponding to the covering layer (2) and the exterior material (5) in said composite wire (7). The method is characterized in that (A) the metal wire (1) is a titanium wire material or a titanium-alloy wire material; (B) the covering layer (2) and the exterior material (5) are mild steel containing 0.25 wt% or less or carbon; and (C) the maximum temperature the composite strand reaches during the annealing heat treatment conducted for the composite strand (6) is between 700°C and 800°C.

## Description

The present invention relates to a titanium fiber or a titanium alloy fiber with a circle-corresponding diameter of 5 µm to 30 µm, and a manufacturing method thereof. Hereinafter in the present invention, titanium and titanium alloy will collectively be called "titanium".

Ultrafine metal fibers with a diameter of about 5 µm to 30 µm have been used as a material for filters or catalyst carriers, or as fillers for applying conductivity or strength to plastics, cloths or the like. As for these types of ultrafine metal fibers, there have been widely used stainless-steel fibers manufactured according to a bundling wire-drawing process. On the other hand, there has been a demand for a material for filters or catalyst carriers having a greater corrosion resistance than stainless-steel fibers, or filler which is more lightweight and has a greater specific intensity than stainless-steel fibers; and titanium fibers have been focused upon.

As for a manufacturing method of ultrafine metal fibers with a diameter of about 5 µm to 30 µm, there has been known the bundling wire-drawing process, and for example, a manufacturing process described below has been disclosed.

In Japanese Patent Application Laid-open Publication No. Hei 11-81050, there is disclosed a method of: forming a covered strand by subjecting to a cold wire-drawing a covered wire obtained by covering a pure-titanium or titanium alloy wire with a covering layer comprised of steel having a carbon content of 0.12 weight %; forming a composite strand by bundling a multitude of these covered strands and inserting them into a steel tube; forming a composite strand by conducting a following cold wire-drawing; and melting and removing a portion corresponding to the steel tube and the covering layer by electrolysis to obtain a metal fiber bundle.

However, in considering the application of this method of manufacturing titanium fibers, it turned out that the diffusion condition greatly changes according to the interface condition between titanium and mild steel, and it turned out that it is not possible to obtain a proper construction when an oil component or the like exists in the interface, since the diffusion of titanium and mild steel diffuses at a low temperature. Further, in this manufacturing method, because the diffusion phenomenon in the interface of titanium and mild steel is considered, the annealing heat treatment of an electro-resistance-welded portion, when forming an electro-resistance-welded tube of a covering steel and an exterior material, becomes insufficient; and since it becomes difficult to sufficiently recover the wire-drawing workability, breakage of wires occurred during cold wire-drawing, and it was not possible to obtain a titanium fiber.

Considering the problems of the above-described conventional art, an object of the present invention is to provide a method of manufacturing an ultrafine titanium fiber or titanium alloy fiber by implementing an annealing heat treatment with an appropriate construction when each surface condition is in a proper state.

The present invention relates to a method of manufacturing titanium fiber or titanium-alloy fiber, which includes the steps of: forming a covered wire, in which a covering layer 2 is formed around the periphery of a metal wire 1; forming a composite strand 6 by bundling a multitude of covered wires 4, and covering the wires with an exterior material 5; forming a composite wire 7 by repetitively subjecting the composite strand 6 to cold wire-drawing processing and annealing heat treatment; and conducting a wire-separating process to form a metal fiber bundle 8 by removing a portion corresponding to the covering layer 2 and the exterior material 5 in the composite wire 7; wherein (A) the metal wire 1 is a titanium wire material or a titanium-alloy wire material; (B) the covering layer 2 and the exterior material 5 are mild steel containing 0.25 wt% or less of carbon; and (C) the maximum temperature the composite strand reaches during the annealing heat treatment conducted for the composite strand 6 is between 700 °C and 800 °C.

Step of manufacturing the above-described covered wire 4 may comprise the steps of forming the covering layer 2 around the periphery of the metal wire 1 to provide a covered strand 3; and conducting, at least once, an annealing heat treatment and a cold processing to the covered strand 3; and a maximum temperature the covered strand 3 reaches during an annealing heat treatment is between 700 °C and 800 °C. Further, the thickness of the covering layer 2 of the covered wire 4 may be 5 % to 20 % of the diameter of the covered wire 4. Further preferably, the manufacturing method of a titanium fiber or titanium-alloy fiber may have a total processing amount eT = 2 x In (DS/DF) of cold wire-drawing applied to the composite strand 6 (wherein DS is the diameter of the composite strand 6 before conducting cold wire-drawing processing, and DF is the diameter of the composite wire 7) of 5.5 to 7.5.

These and other objects and advantages of the present invention will become clear from the following description with reference to the accompanying drawings, wherein:
Fig. 1 is a figure showing a step of the method for manufacturing a titanium fiber according to the present invention;
Fig. 2 is a schematic sectional view showing an example of a transverse section of a titanium fiber manufactured according to the manufacturing method of the present invention;

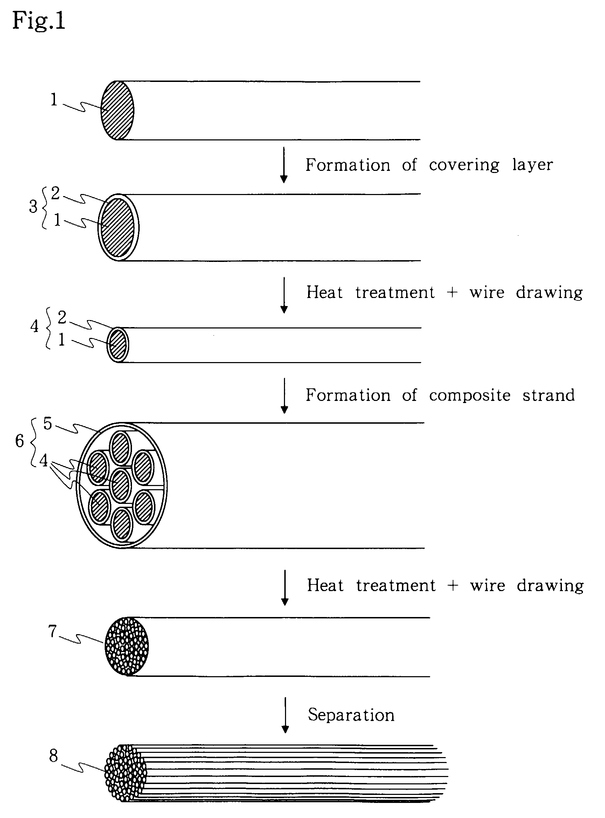

An embodiment of the method of manufacturing a titanium fiber or a titanium alloy fiber according to the present invention will be explained with reference to Fig. 1.

The method of manufacturing a titanium fiber or a titanium alloy fiber according to the present invention relates to a method for manufacturing a titanium fiber or a titanium alloy fiber according to converging wire-drawing. In a manufacturing method of metal fibers comprising the steps of: forming a composite strand 6 by binding a multitude of covered wires 4 having been formed a covering layer 2 around the periphery of a metal wire 1, and by covering this with an exterior material 5; forming a composite wire 7 by repeating cold wire-drawing and the above-described annealing heat treatment to composite strand 6; and conducting a wire-separating process for forming a metal fiber bundle 8 by removing a portion corresponding to the covering layer 2 and the exterior material 5 of the composite wire 7, the method is characterized by having the following characteristics.

(A) The metal wire 1 is a titanium-based alloy wire.

For example, as shown in Table 1, the wire may be pure-titanium, α-alloy, α-β alloy or β-alloy. Table 1 shows a standard condition for an annealing heat treatment to titanium, which is taken from "Technique for Titanium Processing" edited by JAPAN TITANIUM SOCIETY.

**Table 1**

| type | alloy | annealing condition | |
|---|---|---|---|
| | | temperature (°C) | time (hr) |
| α alloy | pure titanium | 538-816 | 0.03-2, air cooled or mildly cooled |
| | Ti-5Al-2.5Sc | 704-919 | 0.03-4, air cooled or mildly cooled |
| α-β alloy | Ti-3Al-2.5V | 704-760 | 1-3, air cooled |
| | Ti-6Al-2Cb-1Ta-1Mo | 704-927 | 0.03-4, air cooled |
| | Ti-8Al-1Mo-1V | 704-927 | 0.03-8, air cooled |
| | Ti-6Al-2Si-4Zi-2Mo | 704-843 | 1-3, air cooled |
| | Ti-6Al-4V | 690-871 | 0.03-8, air cooled |
| | Ti-6Al-6V-2Sc | 704-815 | 1-3, air cooled |
| β alloy | Ti-13V-11Cr-3Al | 760-816 | 0.03-1, air cooled |

(B) The covering layer 2 of the covered wire 4 and the exterior material 5 of the composite strand 6 is mild steel containing 0.25 wt% or below, preferably, 0.12 wt% or below of carbon.

Particularly, the material for the covering layer 2 of the covered wire 4 is important, and it is preferable for the exterior material 5 of the composite strand 6 to be the same material as the covering layer 2 of the covered wire 4. This is to facilitate setting of the condition for annealing heat treatment, which will be described below.

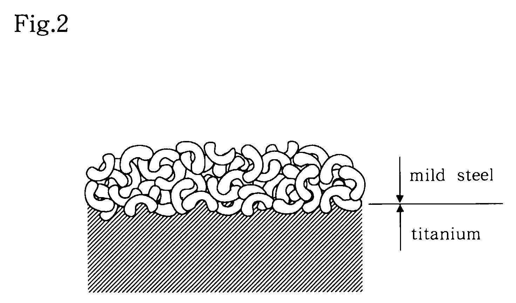

One reason for particularly specifying the material for the covering layer 2, is because it is possible to form a plurality of projections and depressions on the surface of the titanium fiber or the titanium alloy fiber 8 to be manufactured to gain the surface area the fiber has per unit weight, i.e., the specific surface thereof. That is, mild steel is a polycrystalline material having a crystal structure of a body-centered cubic lattice, and each of the crystal grains has a strong anisotropy in view of deformation. Therefore, as shown schematically in Fig. 2, when bundling a multitude of covered wires 4 which adopts a titanium-based alloy as the core 1 and are covered with mild steel as the covering layer 2, and wire-drawing processing the composite strand 6 which is formed by covering the bound covered wires 4 with the exterior material 5, each of the crystals of the mild steel forming the covering layer 2 curves and deforms within the transverse section, and a plurality of projections and depressions are formed on the surface of the titanium-based alloy core 1. Thus, it is possible to increase the specific surface of the titanium-based alloy fiber 8 obtained by removing a portion corresponding to the covering layer 2 and the exterior material 5.

In the method for manufacturing titanium fiber of the present invention, among the polycrystalline material having a crystal structure of a body-centered cubic lattice, mild steel containing 0.25 wt% or below, preferably, 0.12 wt% or below of carbon, is particularly preferred as the material for the covering layer 2, because the material has a low cost, is good in workability and is easy to form the covered wire 4. A carbon steel where carbon content thereof particularly exceeds 0.25 wt%, is not preferable because the hardening degree by wire-drawing processing is too large, and there is a need to increase the number of heat treatment during the processing. A carbon steel containing carbon of 0.25 wt% or less, particularly 0.12 wt% or less is preferred because it becomes possible to overcome the above-described object, and bending and welding characteristics becomes good, and forming of the covering layer becomes easy.

Further, the formation of the covered wire 4 can be implemented easily by enveloping the periphery of the titanium wire 1 with a thin plate of such as SPCC, SPCE or the like. Furthermore, in order to make the projections and depressions on the surface of the titanium fiber 8 more deep to obtain a titanium fiber with a larger specific surface, it is preferable to make the thickness of the mild steel covering layer 2 relatively thicker in respect to the diameter of the covered wire 4. However, if it is too thick, it tends to cause a problem in that the time required for the wire-separation process, in which a portion corresponding to the covering layer 2 and the exterior material 5 is removed, becomes long. Thus, the preferable range for the thickness of the covering layer 2 is between 5 % to 20 % in view of the diameter of the covered wire 4, and a more preferable range is between 8 % to 15 %.

During the above-described tube-producing process, the use of a lubricant is not preferable. This is because if a lubricant is used, this lubricant remains within the interface between the core and the covering material; and in this case, diffusion between the titanium surface and the mild steel proceed even at a low temperature. As a result, it is impossible to obtain a pure-titanium fiber, and thus, the sintered body becomes brittle even if it is finally sintered during the last process, and it would not be possible to be used as filters or the like.

The larger the amount of cold wire-drawing process carried out for the composite strand 6 (wherein a multitude of covered wires 4 are bundled and covered with an exterior material 5) is, the larger the curving degree of each of the crystal grains of the mild steel becomes, and it is possible to obtain a titanium fiber with a larger specific surface. However, it also tends to cause a problem in that the time required for the wire-separation process becomes long. Therefore, it is preferable for the total processing amount, eT = 2 x In (DS/DF), of cold wire-drawing to be conducted for the composite strand to be between 5.5 to 7.5. Here, DS is the diameter of the composite strand 6 before conducting the cold wire-drawing process, and DF is the diameter of a composite wire 7.

If eT is 5.5 or lower, the curving degree of the crystal grains of the mild steel is too small, and this is not preferable because the projections and depressions of the titanium fiber are small and the specific surface is not too large. On the other hand, if it is 7.5 or larger, the projections and depressions on the surface of the titanium fiber is too rough, and the projections and depressions of adjacent metal fibers within the composite strand mechanically mesh together. This is not preferable because it becomes difficult for separation during the wire-separation process.

(C) The maximum temperature reached for the composite strand during the annealing heat treatment conducted for the composite strand 6 is to be between 700 °C and 800 °C.

This temperature range is a range set by the present inventors, after many experiments and considerations, for the condition of annealing heat treatment to be conducted for the composite strand 6, which is formed by binding a multitude of covered wires 4 with a mild steel covering layer 2 formed around the periphery of a titanium wire 1, and covering this with a mild steel exterior material 5.

Since the standard heat treatment conditions for titanium without a mild steel covering is such as shown in the above-described Table 1, it became clear that, during the annealing heat treatment of the composite strand 6 which includes covered wires 4 with a mild steel covering layer 2 formed around the periphery a titanium wire 1, there is a need to consider both the softening degree of the composite strand 6 and a diffusion phenomenon in the interface between the titanium and the mild steel. That is, if the maximum temperature reached exceeds 800 °C, an alloy layer formed by diffusion in the interface between the titanium and the mild steel develops. Therefore, it becomes difficult to remove the covering layer 2 when obtaining a titanium fiber 8 by removing the covering layer 2, and, even if a titanium fiber 8 is obtained, only a part of a titanium fiber within the composite wire 7 can be obtained, thereby causing an extreme decrease in yield factor. On the other hand, if the maximum temperature reached is below 700 °C, the softening degree of the composite strand 6 becomes insufficient, and this brings about an extreme tendency for a wire breakage during the following cold wire-drawing process.

As can be seen, in the method for manufacturing titanium fiber according to the present invention, it is required for the maximum temperature reached, for the annealing heat treatment conducted for the composite strand 6, to at least be between 700 to 800 °C. However, if the step of forming a covered wire 4 before forming of a composite strand 6 includes an annealing heat treatment for a covered strand 3 with a mild steel covering layer 2 formed on a titanium core 1, it is preferable for the maximum temperature reached for this annealing heat treatment conducted for the covered strand 3 to also be in a range of from 700 to 800 °C. If an annealing heat treatment for the composite strand 6 or the covered wire 4 is to be conducted, since titanium, which has an active surface, is covered with mild steel, it is possible to use a gas combustion furnace or an electric furnace or the like, and carry out an operation within a furnace atmosphere applied for steel wires.

In the method for manufacturing titanium fiber according to the present invention, the wire-drawing processing for the composite strand 6 is particularly to be a cold wire-drawing processing. This is because, if a hot processing at a high temperature is applied, the anisotropy in view of processing is weakened and the effect of forming projections and depressions on the surface of the titanium fiber decreases, and also, because an alloy layer in the interface between the titanium and the mild steel tends to develop. As for the cold wire-drawing processing, it is possible to apply a dry wire-drawing method or a wet wire-drawing method using an apertured die, or a roller die or the like. Further, since the surface of the composite strand 6 or the covered wire 4 is covered with mild steel, it is possible to wire-draw these using a lubricant for wire-drawing of a steel wire.

### Examples

The present invention will further be explained in detail according to preferred examples.

Table 2 shows, for Examples and Comparative Examples of the present invention, the stability of a manufacturing process of composite wire 7, the yield factor of titanium fiber in the wire-separation process, and characteristics of the titanium fiber manufactured undergoing a wire-separation process.

Attempts were made to manufacture composite wires 7 including a multitude of titanium fibers according to four types of manufacturing conditions indicated in Table 2, and the stability of the process, the yield factor of titanium fiber in the wire-separation step, and characteristics of the titanium fiber 8 manufactured undergoing a wire-separation process were compared.

In Table 2, Example 1 and Example 2 are examples complying with the preferred conditions of the method for manufacturing titanium fiber according to the present invention, and in Example 2, the thickness of the covering layer of the covered strand 3 is set to be thicker than that of Example 1. Example 2 is a example where, in order for the circle-corresponding diameter of the titanium fiber 8 being manufactured to be the same as that of Example 1, the final diameter of composite wire 7 is set to be slightly larger than the diameter of Example 1.

Comparative Example 1 is an example in which the maximum temperature reached during the annealing heat treatment of the composite strand 6 is set to be lower than the range complying with the present invention. Further, Comparative Example 2 is, on the contrary to Comparative Example 1, an example in which the maximum temperature reached during the annealing heat treatment of the composite strand 6 is set to be higher than the range complying with the present invention.

In forming a covering layer 2, while forming an electro-resistance-welded tube having a diameter of about 6 mm with a strip plate to be the covering layer 2, a pure-titanium core 1 is inserted thereinto; and this was wire-drawing processed to have a diameter of 4.3 mm, and the inner wall of the tube and the surface of the core was closely contacted. As for the strip plate to be the covering layer 2, a strip plate of SPCC was used. Then, in forming a composite strand 6, while forming an electro-resistance-welded tube having a diameter of about 6 mm with a strip plate of SPCC to be the covering layer 2, a bundle of covered wires 4 were inserted thereinto; and this was tightened up by wire-drawing processing.

The heat treatment was implemented by continuously passing the strand through an electric furnace set at a predetermined temperature. It was heat treated in a weak-oxidative atmosphere, and was subjected to a following wire-drawing processing after cleaning the surface by acid-washing and water-washing. As for the wire-drawing processing, a dry-type or wet-type cold wire-drawing was applied, and a lubricant for steel wires was used.

**Table 2**

| Process | Operation | Item | Example 1 | Example 2 | Comparative Example 1 | Comparative Example 2 |
|---|---|---|---|---|---|---|
| covered wire manufacturing | covering layer forming | core | pure titanium wire material | pure titanium wire material | pure titanium wire material | pure titanium wire material |
| | | material for covering layer | mild steel | mild steel | mild steel | mild steel |
| | | thickness of covering layer | 0.4 | 0.6 | 0.4 | 0.4 |
| | | diameter of covered strand | 4.3 | 4.3 | 4.3 | 4.3 |
| | heat treatment | furnace temperature (°C) | 700 | 800 | 600 | 900 |
| | | furnace passing time (seconds) | 90 | 90 | 90 | 90 |
| | | temperature reached (°C) | 700 | 800 | 600 | 900 |
| | dry wire-drawing | diameter before wire-drawing (mm) | 4.3 | 4.3 | 4.3 | 4.3 |
| | | diameter after wire-drawing (mm) | 1.19 | 1.19 | 1.19 | 1.19 |
| composite wire manufacturing | composite strand forming | number of covered wires (wires) | 250 | 250 | 250 | 250 |
| | | material for exterior material | mild steel | mild steel | mild steel | mild steel |
| | | thickness of exterior material (mm) | 0.4 | 0.4 | 0.4 | 0.4 |
| | | diameter of composite strand (mm) | 4.3 | 4.3 | 4.3 | 4.3 |
| | heat treatment | furnace temperature (°C) | 700 | 800 | 600 | 900 |
| | | furnace passing time (seconds) | 90 | 90 | 90 | 90 |
| | | temperature reached (°C) | 700 | 800 | 600 | 900 |
| | dry wire-drawing | diameter before wire-drawing (mm) | 4.3 | 4.3 | 4.3 | 4.3 |
| | | diameter after wire-drawing (mm) | 1.19 | 1.19 | 1.19 | 1.19 |
| | heat treatment | furnace temperature (°C) | 620 | 620 | 620 | 620 |
| | | furnace passing furnace passing time (seconds) | 40 | 40 | 40 | 40 |
| | | temperature reached (°C) | 620 | 620 | 620 | 620 |
| | wet wire-drawing | diameter before wire-drawing (mm) | 1.19 | 1.19 | 1.18 | 1.19 |
| | | diameter after wire-drawing (mm) | 0.18 | 0.18 | 0.18 | 0.18 |

As a result of the attempt to manufacture the composite wires 7 including a multitude of titanium fibers 8 according to four types of manufacturing conditions indicated in Table 2, in Comparative Example 1 wherein the heat treating temperature of composite strand 6 was set at excessively low, wire breakage occurred many times during the dry wire-drawing processing and the wet wire-drawing processing, and it was not possible to obtain a composite wire 7 with an intended diameter. However, in the other examples, composite wires 7 with an intended diameter were obtained.

In the specific manufacturing process, in view of the carbon content and workability, if, for example, a carbon steel with a carbon content of about 0.55 wt% is used, a portion, which is welded while forming the electro-resistance-welded tube, cracks during wire-drawing, and it cannot resist during the present processing.

Further, as for eT, it is 6.14 for Example 2 and 6.35 for the other examples, which means that it was possible to implement the wire-drawing processing and the wire-separation treatment without any problem, and to obtain a titanium fiber with a high specific surface.

Thus, an attempt was made to manufacture a titanium fiber bundle 8 by conducting wire-separation treatment to the three types of composite wires 7 except for Comparative Example 1, and the yield factor of the wire-separation process was compared.

The results thereof are shown in Table 3 with respect to the degree of wire-separation in the wire-separation process. The wire-separation treatment was carried out by selectively conducting electrolysis to a portion corresponding to the covering layer 2 and the exterior material 5 of the composite wire 7 in an electrolytic solution containing sulfuric acid.

**Table 3**

| Item | Example 1 | Example 2 | Comparative Example 1 | Comparative Example 2 |
|---|---|---|---|---|
| yield factor of wire-separating process (%) | 100 | 100 | - | 7 |
| circle-corresponding diameter of fiber (µm) | about 8 | about 8 | - | about 8 |

The yield factor of the wire-separation process is a rate which was separated as a titanium fiber 8 from the titanium strand which is embedded in the composite wire 7, wherein the time for electrolysis in the wire-separation process is 1 hour at the longest.

As shown in Table 3, it was not possible to completely wire-separate the composite wire 7 of Comparative Example 2, in which the heat treating temperature of composite strand 6 was set to be excessively high, even when the electrolysis time in the wire-separation process took 1 hour; and the yield factor was extremely low. On the contrary, it was possible to fully wire-separate the composite wire 7 of Example 1 and Example 2 which comply with the manufacturing method of the present invention within 1 hour of electrolysis. The obtained titanium fiber 8 had a plurality of projections and depressions, and it was possible to obtain a titanium fiber 8 which has a large specific surface.

As described above, according to the method for manufacturing titanium fiber of the present invention, it is possible to stably manufacture, with a high yield factor, a titanium fiber which has a high specific surface, which has high performance, and which can be used as a material for a catalyst carrier or a gas absorber being good in corrosion resistance.

While there has been described what are at present considered to be preferred embodiments of the present invention, it will be understood that various modifications may be made thereto, and it is intended that the appended claims cover all such modifications as fall within the true spirit and scope of the invention.

## Claims

1. A method of manufacturing titanium fiber or titanium-alloy fiber, which includes the steps of: forming a covered wire (4), in which a covering layer (2) is formed around the periphery of a metal wire (1); forming a composite strand (6) by bundling a multitude of covered wires (4), and covering the wires with an exterior material (5); forming a composite wire (7) by repetitively subjecting said composite strand (6) to cold wire-drawing processing and annealing heat treatment; and conducting a wire-separating process to form a metal fiber bundle (8) by removing a portion corresponding to the covering layer (2) and the exterior material (5) in said composite wire (7);
characterized in that (A) the metal wire (1) is a titanium wire material or a titanium-alloy wire material; (B) the covering layer (2) and the exterior material (5) are mild steel containing 0.25 wt% or less of carbon; and (C) the maximum temperature the composite strand reaches during the annealing heat treatment conducted for the composite strand (6) is between 700°C and 800°C.

2. A method as claimed in claim 1, characterized in that the step of forming the covered wire (4) includes a step of forming the covering layer (2) around the periphery of the metal wire (1) to provide a covered strand (3).

3. A method as claimed in claim 2, characterized in that the covering layer (2) is formed around the periphery of the metal wire (1) without a lubricant.

4. A method as claimed in any of claims 1 to 3, characterized in that the step of forming the covered wire (4) includes a step of conducting, at least once, an annealing heat treatment and a cold processing to the covered strand (3).

5. A method as claimed in any of claims 1 to 4, characterized by further comprising a step of forming a covering layer (2) around the periphery of a metal wire (1), by arranging that a maximum temperature the covered strand (3) reaches during an annealing heat treatment is between 700°C and 800°C, and taking this as a covered strand (3).

6. A method as claimed in any of claims 1 to 5, characterized in that the thickness of the covering layer (2) of the covered wire (4) is 5% to 20% of the diameter of the covered wire; and a total processing amount eT = 2 x In (DS/DF) of cold wire-drawing applied to the composite strand (6), wherein DS is the diameter of a composite strand before conducting a cold wire-drawing processing and DF is the diameter of a composite wire, is 5.5 to 7.5.

7. A method of manufacturing titanium fiber or titanium-alloy fiber, which includes the steps of: forming a composite strand (6) by bundling a multitude of covered wires (4), and covering the wires with an exterior material (5), wherein each of said covered wires (4) is formed by applying a covering layer (2) around the periphery of a metal wire (1); forming a composite wire (7) by repetitively subjecting said composite strand (6) to cold wire-drawing processing and annealing heat treatment; and conducting a wire-separating process to form a metal fiber bundle (8) by removing a portion corresponding to the covering layer (2) and the exterior material (5) in said composite wire (7);
characterized in that (A) the metal wire (1) is a titanium wire material or a titanium-alloy wire material; (B) the covering layer (2) and the exterior material (5) are mild steel containing 0.25 wt% or less of carbon; and (C) the maximum temperature the composite strand reaches during the annealing heat treatment conducted for the composite strand (6) is between 700°C and 800°C.
